(19) Europäisches Patentamt
European Patent Office
Office européen des brevets

(11) **EP 1 118 086 B1**

(12) **EUROPÄISCHE PATENTSCHRIFT**

(45) Veröffentlichungstag und Bekanntmachung des Hinweises auf die Patenterteilung:
**06.11.2002  Patentblatt 2002/45**

(21) Anmeldenummer: **99952411.9**

(22) Anmeldetag: **16.08.1999**

(51) Int Cl.⁷: **H01B 3/04**, H01B 3/08, H01B 3/00, H02K 3/40

(86) Internationale Anmeldenummer:
**PCT/DE99/02559**

(87) Internationale Veröffentlichungsnummer:
**WO 00/013191 (09.03.2000 Gazette 2000/10)**

(54) **GLIMMSCHUTZBAND**

GLOW PROTECTION BAND

BANDE ANTI-EFFLUVES

(84) Benannte Vertragsstaaten:
**DE FR**

(30) Priorität: **28.08.1998  DE 19839285**

(43) Veröffentlichungstag der Anmeldung:
**25.07.2001  Patentblatt 2001/30**

(73) Patentinhaber: **SIEMENS AKTIENGESELLSCHAFT 80333 München (DE)**

(72) Erfinder:
• **MUHRER, Volker D-90768 Fürth (DE)**
• **ROGLER, Wolfgang D-91096 Möhrendorf (DE)**
• **SCHÄFER, Klaus D-90455 Nürnberg (DE)**

(56) Entgegenhaltungen:
**EP-A- 0 422 928          EP-A- 0 573 796**
**DE-A- 3 045 462**

**Beschreibung**

Die Erfindung betrifft ein Glimmschutzband für elektrische Maschinen, insbesondere Hochspannungsmaschinen.

Eine elektrische Maschine besteht im wesentlichen aus einem Ständer, der aus dem sogenannten Blechpaket aufgebaut ist, bei dem in vorgeformte Nuten isolierte Wicklungen eingelegt sind, sowie aus einem Läufer, der sich im Ständer dreht. Das Blechpaket setzt sich aus einer bestimmten Anzahl von aufeinander gestapelten Einzelblechen zusammen, in welche die Nuten eingestanzt sind. In diese Nuten ist die Ständerwicklung eingelegt, die - je nach Anforderung - mit einem bestimmten Isoliersystem beschichtet ist. Ein typisches Isoliersystem für Hochspannungsmaschinen weist eine Hauptisolierung auf, welche aus Glimmerbändern besteht, die um den Leiter gewickelt sind. Die Ständerwicklung ist im Nutbereich mit einem elektrisch gut leitenden Außenglimmschutz (AGS) versehen, um Teilentladungen in diesem Bereich zu verhindern. Der Außenglimmschutz ist dabei über das Blechpaket hinausgeführt, so daß auch bei geringen Abständen gegen Druckplatten und Druckfinger des Blechpakets keine Entladungen auftreten können. Mittels eines Tränkprozesses (VPI-Prozeß) werden die Wicklungen noch mit einem Tränkharz imprägniert, das dann ausgehärtet wird.

Die elektrischen Verhältnisse am Nutaustritt von Hochspannungsmaschinen entsprechen denen einer Gleitanordnung. Dabei endet eine Elektrode, d.h. der über das Blechpaket geerdete Außenglimmschutz, kurz nach dem Blechpaket, die andere Elektrode, d.h. der Leiter, verläuft dagegen weiter. Diese Anordnung ergibt eine Feldstärkenerhöhung an der Isolationsoberfläche am Ende des Außenglimmschutzes. Die daraus resultierende Tangentialfeldstärke $E_T$ entlang der Oberfläche der Hauptisolierung führt bei Überschreitung der Durchschlagsfeldstärke der Luft zu Glimm- und Gleitentladungen, die die Isolierung zerstören können. In der Praxis ist dies ab Betriebsspannungen > 5 kV der Fall.

Ohne Maßnahmen zur Feldsteuerung wird das Potential der einzelnen Oberflächenelemente der Hauptisolierung gegenüber dem Ende des Außenglimmschutzes von den beiden Kapazitäten $C_1$ (Kapazität zwischen den einzelnen Oberflächenelementen und dem Außenglimmschutz) und $C_0$ (Kapazität der Isolierung zwichen den Oberflächenelementen und dem Leiter) und der angelegten Spannung bestimmt. Für die Anfangsspannung $U_a$, bei der Gleitentladungen einsetzen, ergibt sich:

$$U_a \approx E_d \sqrt{\frac{C_1}{C_0}} \, ,$$

wobei $E_d$ die Durchschlagsfeldstärke des umgebenden Mediums ist. Mit Luft als Umgebungsmedium wird $C_1$ klein gegenüber $C_0$ und der größere Teil der Spannung liegt zwischen dem Außenglimmschutz und den Oberflächenelementen der Isolierung. Bei Hochspannungsmaschinen mit einer Betriebsspannung > 5 kV wird deshalb im Anschluß an den Außenglimmschutz ein Belag mit definierter niedriger Leitfähigkeit aufgebracht, durch den die Oberflächenkapazität $C_1$ kurzgeschlossen wird. Der Ladestrom für die Kapazität $C_0$ erzeugt dann einen Spannungsabfall, durch den das anliegende Potential allmählich abgebaut wird. Dieser Belag auf der Hauptisolierung wird als Endenglimmschutz (EGS) oder Potentialsteuerung bezeichnet.

Die Isolierungen werden dazu üblicherweise mit einer elektrisch leitenden Schicht mit angepaßtem spezifischen elektrischen Widerstand versehen. In der Praxis erfolgt dies mit Lacken oder Isolierbändern, denen Siliciumcarbid als leitfähiger Füllstoff zugesetzt ist. Dieser Füllstoff zeigt im dotierten Zustand halbleitende Eigenschaften und eine stark spannungsabhängige Leitfähigkeit, was bedeutet, daß der Oberflächenwiderstand der Glimmschutzschicht mit steigender Feldstärke abnimmt und umgekehrt. Dies führt zu einer hohen Leitfähigkeit des Endenglimmschutzes am Übergang zum Außenglimmschutz und zu einer niedrigen Leitfähigkeit des Endenglimmschutzes am Übergang zur Isolierungsoberfläche. Damit wird ein stetiger Abbau der Feldstärke bis zur Isolierungsoberfläche erreicht. In der Praxis haben sich Glimmschutzschichten bewährt, deren Oberflächenwiderstand, gemessen nach DIN IEC 167, zwischen 800 und 5000 MΩ bei 5 kV Gleichspannung liegt.

Zur Herstellung der Glimmschutzschicht werden meistens Isolierbänder verwendet, sogenannte Glimmschutzbänder. Diese bestehen aus einem Trägermaterial aus Glasgewebe oder organischem Gewebematerial, das mit einem Epoxidharz (als Bindemittel) getränkt ist, welches Siliciumcarbid als anorganischen Füllstoff in angepaßter Korngröße und Konzentration enthält. Siliciumcarbid (SiC) wird deshalb als leitfähiger Füllstoff in Glimmschutzschichten verwendet, weil es - anders als metallische Füllstoffe - die Einstellung der geforderten sehr geringen Leitfähigkeiten im überperkollierten Bereich erlaubt, und sich damit die Leitfähigkeit bei verarbeitungsbedingt gering schwankenden Füllstoffkonzentrationen nicht wesentlich ändert. Das Siliciumcarbid wird meist in dotierter Form verwendet, um die Leitfähigkeit, insbesondere die Spannungsabhängigkeit der Leitfähigkeit, auf das gewünschte Niveau einzustellen. In der Praxis hat sich dabei mit Aluminium p-leitend eingestelltes Siliciumcarbid bewährt. Als Epoxidharze werden handelsübliche Glycidylether verwendet. Die Harze können einen aminischen Härter sowie einen Härtungsbeschleuniger enthalten. Derartige Glimmschutzbänder sind beispielsweise aus folgenden Druckschriften bekannt: DE-OS 30 45 462, DE-OS 42 18 928 und US-PS 3 066 180.

Das Glimmschutzband wird in dem Bereich der Wicklung, der dem Eisenkern am nächsten liegt, überlappend um den Außenglimmschutz gewickelt. Anschließend wird dann die gesamte Wicklung einem VPI-Prozeß (Vacuum Pressure Impregnation) mit einem Tränkharz unterworfen. Dies bedeutet, daß das verwendete Glimmschutzband mit diesem komplexen Prozeß kompatibel sein muß. So darf das Band keine den Imprägnierprozeß störenden Bestandteile enthalten bzw. in das Tränkbad abgeben. Zudem muß es homogen in den nach der Härtung entstehenden Formstoff eingebaut sein, damit Teilentladungen vermieden werden.

Auf dem Markt erhältliche Glimmschutzbänder mit Siliciumcarbid als leitfähigen Füllstoff weisen jedoch im technischen Einsatz gravierende Nachteile auf. So zeigen Glimmschutzbänder gleichen Typs chargenabhängig große Streuungen im dielektrischen Verhalten (Widerstandsniveau). Das ist zum einen Teil bereits bei der Eingangsprüfung der Leitfähigkeit an Prüfkörpern aus reinem Endenglimmschutz festzustellen, zum anderen Teil jedoch erst an den fertig isolierten und VPIimprägnierten Wicklungen durch auftretende Glimmentladungen. Die Ursache dafür wird im technischen Herstellungsprozeß des Siliciumcarbids vermutet. Dieses wird in Drehrohröfen in reduzierender Atmosphäre aus Siliciumcarbid und Kohlenstoff hergestellt (Acheson-Prozeß). Auf der Oberfläche der dabei entstehenden SiC-Partikel bilden sich oxidische Schichten unterschiedlicher Ausprägung, die einen starken Einfluß auf die Leitfähigkeit haben. Als Folge ergibt sich - abhängig von der Qualität des Glimmschutzes - häufig eine nicht zu tolerierende Beeinträchtigung der Isolierung durch erhöhte dielektrische Verluste.

Die in Kunststoffen technisch üblicherweise eingesetzten leitfähigen Füllstoffe wie Ruß, Aluminiumpulver und Silberpulver sind im vorliegenden Fall nicht brauchbar, da sie eine zu hohe spezifische Leitfähigkeit aufweisen.

Aufgabe der Erfindung ist es, Glimmschutzbänder zur Verfügung zu stellen, die in reproduzierbarer Qualität hergestellt werden können und in den Wicklungsisolierungen elektrischer Maschinen einen möglichst geringen Anstieg der dielektrischen Verluste bewirken.

Dies wird erfindungsgemäß durch Glimmschutzbänder erreicht, die auf folgende Weise erhalten werden können:

- Ein gewebeartiges Trägermaterial wird mit einer Lösung eines Reaktionsharzes imprägniert bzw. getränkt, wobei die Lösung ferner einen anorganischen Füllstoff, der eine Beschichtung aus mit Antimon dotiertem Zinnoxid aufweist, sowie gegebenenfalls einen Härter und/oder einen Beschleuniger enthält;
- nach der Imprägnierung (Tränkung) wird das Lösemittel durch eine thermische Behandlung entfernt, d.h. bei erhöhter Temperatur.

Durch die thermische Behandlung wird nicht nur das Lösemittel entfernt, sondern dabei wird durch eine Vorreaktion auch erreicht, daß das Glimmschutzband bzw. das Reaktionsharz kaum noch klebrig und deshalb in technischen Prozessen handhabbar ist. Es erfolgt zwar noch keine Härtung, nach der thermischen Behandlung kann aber bereits ein "vorreagiertes" Reaktionsharz vorliegen, d.h. ein Reaktionsharz im sogenannten B-Zustand. In diesem Zustand kann das Reaktionsharz beim späteren VPI-Prozeß vom Tränkharz noch angequollen bzw. angelöst werden und mit diesem - beim Aushärten - einen stabilen Verbund bilden.

Die Temperatur, bei der die thermische Behandlung erfolgt, richtet sich nach dem jeweils eingesetzten Lösemittel, d.h. nach dessen Siedepunkt, und nach der Reaktivität des verwendeten Reaktionsharzes. So erfolgt beispielsweise bei der Verwendung des bevorzugt als Lösemittel eingesetzten Methylethylketons (Sdp. 80°C) die thermische Behandlung bei einer Temperatur von maximal ca. 110°C. Als Lösemittel sind ferner beispielsweise auch Aceton, Essigsäureethylester, Ethanol und Toluol geeignet.

Ein wesentliches Merkmal der Erfindung ist der spezielle Füllstoff der Glimmschutzbänder. Dieser Füllstoff, der elektrisch leitfähig sein muß, ist ein anorganisches Material, das eine Beschichtung aus mit Antimon dotiertem Zinnoxid aufweist (im folgenden auch als Antimon/Zinnoxid bezeichnet); es liegt hierbei somit eine Art Mischoxid vor. Der Anteil des Antimons im Mischoxid beträgt vorteilhaft 0,1 bis 30 Gew.-%. Dabei ergibt sich ein Füllstoff mit ausreichenden halbleitenden Eigenschaften. Prinzipiell kann auch ein reines Zinnoxid eingesetzt werden, bei dem die elektrische Leitfähigkeit durch ein stöchiometrisches Sauerstoffdefizit gegeben ist.

Die halbleitenden Eigenschaften von Antimon-dotiertem Zinnoxid sind bekannt und beispielsweise im Zusammenhang mit dessen Verwendung bei Hochspannungsisolatoren (siehe: J. Indian Inst. Sci., Vol. 62 (A), March 1980, Seiten 83 bis 88) und in leitfähigen Thermoplastcompounds (siehe: Kunststoffe, Bd. 86 (1996) 1, Seiten 73 bis 78) beschrieben. Aufgrund der hohen Dichte von ca. 7 g/cm$^3$ sind entsprechende Füllstoffe aber schwierig zu verarbeiten. Außerdem besteht die Gefahr von Inhomogenitäten durch Sedimentation, was den Einsatz in Glimmschutzschichten für elektrische Maschinen ausschließt.

Anorganische bzw. mineralische Füllstoffe, die mit Antimon-dotiertem Zinnoxid beschichtet sind,sind an sich bekannt. Sie werden in Thermoplasten und Lacken für EMS-Anwendungen (Electro Magnetical Shielding) eingesetzt, beispielsweise in antistatischen Beschichtungen für elektronische Geräte (siehe: Farbe und Lack, Bd. 96 (1990) 6, Seiten 412 bis 415, und EOS/ESD Symposium Proceedings, September 1990, Seiten 224 bis 230).

Umfangreiche Untersuchungen haben gezeigt, daß sich mit Antimon-dotiertem Zinnoxid beschichtete Füllstoffe als leitfähige Zusätze in Glimmschutzbändern für elektrische Maschinen eignen und daß damit die Leitfähigkeit in Glimmschutzschichten sehr präzise und reproduzierbar gemäß den Anforderungen für Hochspannungsmaschinen eingestellt werden kann. Es lassen sich damit Wicklungsisolierungen für Hochspannungsmaschinen herstellen, deren dielektrische Verluste im Rahmen der durch DIN VDE 0530 Teil 1 Abschnitt 6 vorgegebenen Grenzen liegen. Dies war aber sehr überraschend und konnte nicht vorhergesehen werden.

Der Gehalt der Glimmschutzbänder nach der Erfindung an Füllstoff beträgt im allgemeinen 2,5 bis 75 Gew.-%, vorzugsweise 2,5 bis 25 Gew.-%, und zwar bezogen auf den Anteil an Reaktionsharz sowie gegebenenfalls Härter und/oder Beschleuniger.

Als Trägermaterial dienen vorzugsweise Glasgewebe und Gewebe aus organischem Material, insbesondere in Form von Fasern aus Polyestern oder Aramiden, d.h. Polyamiden aus aromatischen Diaminen und aromatischen Dicarbonsäuren. Soweit sie den Anforderungen an Isoliermaterialien für elektrische Maschinen entsprechen, können aber auch andere organische Gewebetypen, beispielsweise auf Basis von Polypropylen oder fluorierten Polymeren, eingesetzt werden. Um den Auftrag auf die elektrische Wicklung möglichst gering zu halten, werden üblicherweise Gewebetypen mit einem Flächengewicht von 30 bis 200 g/m$^2$ verwendet.

Als Bindemittel, d.h. als Harz, kommen prinzipiell alle gängigen Reaktionsharze infrage, wie Alkydharze, Epoxidharze, Imidharze, Polyesterharze und Siliconharze. Aufgrund des ausgewogenen Eigenschaftsprofils hinsichtlich dielektrischer Eigenschaften, Temperaturstabilität und Verarbeitungsverhalten sowie der guten Verträglichkeit mit dem Isoliersystem haben sich jedoch Epoxidharze als besonders geeignet erwiesen. Dabei haben sich - aufgrund der thermischen Beständigkeit - insbesondere aromatische Di- und Polyglycidylether für Isolationsmaterialien in elektrischen Mazschinen bewährt.

Als Härter werden, soweit ein Härter überhaupt erforderlich ist, insbesondere aminische Verbindungen eingesetzt. Dies sind vorzugsweise aromatische Amine, insbesondere aromatische Diamine, und Bortrifluorid-Amin-Addukte, beispielsweise mit Monoethylamin und Piperidin. Als Beschleuniger können insbesondere Imidazolderivate dienen. Weitere einsetzbare Beschleuniger sind beispielsweise tertiäre Amine und Ammoniumverbindungen.

Zur problemlosen Verarbeitung ist eine gewisse Flexibilität der Glimmschutzbänder vorteilhaft, weil sie dann ohne Faltenund Taschenbildung auf die Isolierungsoberfläche aufgewickelt werden können. Von Vorteil ist außerdem eine leichte Eigenklebrigkeit, damit ohne eine zusätzliche Fixierung mit Klebebändern gearbeitet werden kann.

Die mit Antimon-dotiertem Zinnoxid beschichteten Füllstoffe werden beispielsweise in der Weise hergestellt, daß hydrolysierbare Antimon- und Zinnverbindungen in eine wäßrige Füllstoffdispersion eingebracht werden und der beschichtete Füllstoff dann getrocknet und erhitzt wird (siehe dazu US-PS 4 373 013). Eine weitere Möglichkeit besteht in der Beschichtung des Füllstoffes mit organischen Antimon- und Zinnverbindungen, die anschließend thermisch zersetzt werden. Mit beiden Verfahren lassen sich Oxidschichten im Bereich von wenigen Nanometern bis einigen hundert Mikrometern Dicke erzeugen. Beispielhaft sei eine Schichtdicke von etwa 30 nm genannt.

Als Füllstoff können prinzipiell alle üblicherweise eingesetzten organischen Materialien, wie $Al_2O_3$, $SiO_2$, $TiO_2$, $BaSO_4$, Kreide ,Talk, Kaolin, Glimmer und Titanate, verwendet werden. Vorzugsweise ist der Füllstoff Glimmer oder ein Titanat, wie Kaliumtitanat, insbesondere in Form von Whiskern.

Das Leitfähigkeitsniveau der beschichteten Füllstoffe läßt sich durch den Gehalt von Antimon im Mischoxid, durch die Schichtdicke des Mischoxids und durch die Korngröße und die Form der Füllstoffe einstellen. Üblicherweise beträgt der Antimonanteil im Mischoxid bis zu 30 Gew.-%, die Schichtdicke des Mischoxids liegt üblicherweise zwischen 1 nm und einigen μm.

Die Herstellung der Glimmschutzbänder erfolgt nach den für die Herstellung von Isolierbänder für elektrische Maschinen üblichen Verfahren. Dabei kommen Lösungen der Reaktionsharze zum Einsatz, in denen der halbleitende Füllstoff dispergiert ist (die verarbeitungsfertigen Mischungen aus Reaktionsharz, Lösemittel und Füllstoff sowie gegebenenfalls Härter und/oder Beschleuniger werden im folgenden auch als Reaktionsharzmassen bezeichnet). Durch die Konzentration des Reaktionsharzes und des Füllstoffes in der Lösung wird die Viskosität und damit der Auftrag auf die Gewebematerialien bestimmt. Die Gewebematerialien werden als mehr oder weniger breite Bänder entweder durch die Lösung gezogen oder mit der Lösung besprüht. Dann durchläuft das Band bei erhöhter Temperatur eine horizontale oder vertikale Trockenstrecke, um das Lösemittel zu entfernen. Anschließend wird das Band aufgewickelt.

Anhand von Ausführungsbeispielen soll die Erfindung noch näher erläutert werden (MT = Masseteile).

Herstellung von Reaktionsharzmassen

Zur Herstellung einer Reaktionsharzmasse wird das Reaktionsharz bei Raumtemperatur in einem Lösemittel gelöst. Der Lösung werden dann gegebenenfalls die berechneten Mengen an Härter bzw. Beschleuniger zugegeben und unter Rühren gelöst. Anschließend wird der berechnete Anteil eines elektrisch leitfähigen Füllstoffes unter Zuhilfenahme eines Dissolvers homogen in der Harzlösung verteilt. Die in den Beispielen verwendeten Komponenten sind in Tabelle 1 zusammengefaßt.

Tabelle 1

| Komponenten | |
|---|---|
| Epoxy-Novolak<br>EP-Wert: 5,56 mol/kg<br>Viskosität bei 80°C: 1500 mPa·s | EP 1 |
| Diglycidylether auf Basis von Bisphenol A<br>EP-Wert: 0,33 mol/kg<br>Viskosität (40 Gew.-% in MEK): 200 mPa·s bei 25°C | EP 2 |
| Diglycidylether auf Basis von Bisphenol A<br>EP-Wert: 0,61 mol/kg<br>Viskosität (40 Gew.-% in MEK): 60 mPa·s bei 25°C | EP 3 |
| Diglycidylether auf Basis von Bisphenol A<br>EP-Wert: 1,2 mol/kg<br>Viskosität (40 Gew.-% in MEK): 15 mPa·s bei 25°C | EP 4 |
| Diglycidylether auf Basis von Bisphenol A (80 % in MEK)<br>EP-Wert: 2,2 mol/kg<br>Viskosität: 1000-3000 mPa·s bei 25°C | EP 5 |
| Methylethylketon (Lösemittel) | MEK |
| 4,4'-Diamino-diphenylsulfon (Härter) | DDS |
| Sulfanilamid (Härter) | SAM |
| Addukt aus Trimethylolpropantriacrylat und Ethylpiperazin (Härter) | TEP |
| $BF_3$-Piperidin-Addukt (Härter) | BFP |
| 2-Methylimidazol (Beschleuniger) | 2-MI |
| Kaliumtitanat-Whisker, mit Antimon-dotiertem Zinnoxid beschichtet<br>Dichte: 4-4,6 g/cm$^3$, Länge: 10-20 µm, Durchmesser: 0,4-0,7 µm<br>Masseverhältnis Sb:Sn = 12:88 | F 1 |
| Glimmer, mit Antimon-dotiertem Zinnoxid beschichtet<br>Dichte: 3,6 g/cm$^3$, Teilchengröße < 15 µm,<br>Masseverhältnis Glimmer:Antimon/Zinnoxid = ca. 1:1<br>Masseverhältnis Sb:Sn = 15:85 | F 2 |

Herstellung von Glimmschutzbändern

Zur Herstellung von Glimmschutzbändern wird ein Gewebeband als Trägermaterial mit definierter Geschwindigkeit durch einen mit der Reaktionsharzmasse gefüllten Behälter gezogen und dabei imprägniert. Der Harzvorrat wird vor und während der Versuchsdurchführung kontinuierlich gerührt, um ein Absetzen des leitfähigen Füllstoffes zu verhindern. Nach der Imprägnierung wird das Gewebeband durch einen Trockenturm mit vier Heizzonen geführt, die unabhängig voneinander regulierbar sind. Es wurde bei folgenden Trockenbedingungen gearbeitet (MEK als Lösemittel): 60°C, 90°C, 110°C und 70°C; Bandgeschwindigkeit: 20 cm/min.

Bestimmung des Oberflächenwiderstandes von gehärteten Glimmschutzbändern

Die in der beschriebenen Weise hergestellten Glimmschutzbänder werden jeweils einlagig, 50 % überlappend auf ein Reagenzglas aus Duranglas (nach DIN 12395) mit einem Außendurchmesser von 30 mm gewickelt. Anschließend werden die Proben 2h bei 160°C im vorgeheizten Umluftofen gehärtet. Die zur elektrischen Kontaktierung notwendigen Elektroden werden in 10 mm Abstand nach DIN IEC 167, VDE 0303 Teil 61 Abschnitt 7 ringförmig mit hochleitender, lufttrocknender Silberleitfarbe aufgestrichen; die Stromanschlüsse werden mit blankem Kupferdraht ausgeführt. Die Widerstandsmessung erfolgt nach DIN IEC 167, VDE 0303 Teil 31 mit einer hochkonstanten Gleichspannungsquelle im Bereich von 1 bis 6 kV in 1 kV-Stufen.

Beispiele 1 bis 5

Es wird der Einfluß des Füllstoffanteils auf die elektrischen Eigenschaften der Glimmschutzbänder untersucht. Als elektrisch leitfähiger Füllstoff dienen mit Antimon/Zinnoxid beschichtete Kaliumtitanat-Whisker. Das Trägermaterial ist ein Polyesterband (Breite 20 mm, Dicke 0,1 mm, Flächengewicht 71,5 g/m$^2$). Die Zusammensetzung der verwendeten Reaktionsharzmassen ist Tabelle 2 zu entnehmen.

Tabelle 2

| Beispiel | EP 1 MT | MEK MT | DDS MT | 2-MI MT | F 1 MT | Füllstoff-Anteil % [1] |
|---|---|---|---|---|---|---|
| 1 | 100 | 100 | 26,57 | 0,372 | 19,04 | 15,0 |
| 2 | 100 | 100 | 26,57 | 0,372 | 15,87 | 12,5 |
| 3 | 100 | 100 | 26,57 | 0,372 | 12,69 | 10,0 |
| 4 | 100 | 100 | 26,57 | 0,372 | 9,52 | 7,5 |
| 5 | 100 | 100 | 26,57 | 0,372 | 6,35 | 5,0 |

[1] bezogen auf die organischen Feststoffanteile der Reaktionsharzmasse

Die Ergebnisse der elektrischen Prüfung (Bestimmung des Oberflächenwiderstandes) sind in Tabelle 3 zusammengefaßt. Es zeigt sich, daß der Oberflächenwiderstand mit zunehmender Spannung abnimmt. Über den Füllstoffanteil im Glimmschutzband kann der Oberflächenwiderstand und damit das daraus resultierende Steuerverhalten der ausgehärteten Glimmschutzbänder über einen Bereich von mehreren Zehnerpotenzen eingestellt werden. Bei einem Anteil von ca. 10 % an Antimon/Zinnoxidbeschichteten Kaliumtitanat-Whiskern wird bei 5 kV ein Oberflächenwiderstand innerhalb des üblicherweise geforderten Niveaus für Glimmschutzbänder erreicht.

Tabelle 3

| Beispiel | Oberflächenwiderstand in MΩ bei | | | | | |
|---|---|---|---|---|---|---|
| | 1 kV | 2 kV | 3 kV | 4 kV | 5 kV | 6 kV |
| 1 | 550 | 120 | 50 | | | |
| 2 | $7 \cdot 10^3$ | 930 | 303 | 170 | 140 | 130 |
| 3 | $1,4 \cdot 10^6$ | $100 \cdot 10^3$ | $23 \cdot 10^3$ | $8 \cdot 10^3$ | $3,9 \cdot 10^3$ | $2,5 \cdot 10^3$ |
| 4 | | $17 \cdot 10^6$ | $1 \cdot 10^6$ | $130 \cdot 10^3$ | $31 \cdot 10^3$ | $14 \cdot 10^3$ |
| 5 | | | $200 \cdot 10^6$ | $80 \cdot 10^6$ | $38 \cdot 10^6$ | $20 \cdot 10^6$ |

Beispiele 6 bis 8

Es wird der Einfluß des Füllstoffanteils auf die elektrischen Eigenschaften der Glinunschutzbänder untersucht. Als elektrisch leitfähiger Füllstoff dient mit Antimon/Zinnoxid beschichteter Glimmer. Das Trägermaterial ist ein Polyesterband (Breite 20 mm, Dicke 0,1 mm, Flächengewicht 71,5 g/m$^2$). Die Zusammensetzung der verwendeten Reaktionsharzmassen ist Tabelle 4 zu entnehmen.

Tabelle 4

| Beispiel | EP 1 MT | MEK MT | DDS MT | 2-MI MT | F 2 MT | Füllstoff-Anteil % [1] |
|---|---|---|---|---|---|---|
| 6 | 100 | 100 | 26,57 | 0,372 | 19,04 | 15,0 |
| 7 | 100 | 100 | 26,57 | 0,372 | 12,69 | 10,0 |
| 8 | 100 | 100 | 26,57 | 0,372 | 6,35 | 5,0 |

[1] bezogen auf die organischen Feststoffanteile der Reaktionsharzmasse

Die Ergebnisse der elektrischen Prüfung (Bestimmung des Oberflächenwiderstandes) sind in Tabelle 5 zusammengefaßt. Es zeigt sich, daß der Oberflächenwiderstand mit zunehmender Spannung abnimmt. Über den Füllstoffanteil im Glimmschutzband kann der Oberflächenwiderstand und damit das daraus resultierende Steuerverhalten der ausgehärteten Glimmschutzbänder über einen Bereich von mehreren Zehnerpotenzen eingestellt werden. Bei einem Anteil von ca. 10 % an Antimon/Zinnoxidbeschichtetem Glimmer wird bei 5 kV ein Oberflächenwiderstand innerhalb des üblicherweise geforderten Niveaus für Glimmschutzbänder erreicht.

Tabelle 5

| Beispiel | Oberflächenwiderstand in MΩ bei | | | | | |
|---|---|---|---|---|---|---|
| | 1 kV | 2 kV | 3 kV | 4 kV | 5 kV | 6 kV |
| 6 | 715 | 60 | | | | |
| 7 | $940 \cdot 10^3$ | $125 \cdot 10^3$ | $27 \cdot 10^3$ | $5,3 \cdot 10^3$ | $1,2 \cdot 10^3$ | 510 |
| 8 | $54 \cdot 10^6$ | $40 \cdot 10^6$ | $21 \cdot 10^6$ | $15 \cdot 10^6$ | $9 \cdot 10^6$ | $6 \cdot 10^6$ |

Beispiele 9 bis 12

Es wird der Einfluß unterschiedlicher Epoxidharzkomponenten auf die elektrischen Eigenschaften der Glimmschutzbänder untersucht. Als elektrisch leitfähiger Füllstoff dienen mit Antimon/Zinnoxid beschichtete Kaliumtitanat-Whisker. Das Trägermaterial ist ein Glasseidenband (Breite 20 mm, Dicke 0,1 mm, Flächengewicht 139 g/m$^2$). Die Zusammensetzung der verwendeten Reaktionsharzmassen ist Tabelle 6 zu entnehmen.

Tabelle 6

| Beispiel | Reaktionharz | Lösemittel | Härter/ Beschleuniger | Füllstoff | Füllstoff-Anteil [1] |
|---|---|---|---|---|---|
| 9 | EP 1 100 MT EP 2 62,5 MT | MEK 180 MT | DDS/2-MI 27,58 MT/0,386 MT | F1 19,05 MT | 10,0 % |
| 10 | EP 3 50 MT EP 4 50 MT | MEK 120 MT | DDS/2-MI 4,2 MT/0,06 MT | F1 10,43 MT | 10,0 % |
| 11 | EP 1 100 MT EP 3 62,5 MT | MEK 135 MT | DDS/2-MI 28,39 MT/0,39 MT | F1 19,09 MT | 10,0 % |
| 12 | EP 5 100 MT | MEK 80 MT | DDS/2-MI 10,35 MT/0,145 MT | F1 11,05 MT | 10,0 % |

[1] bezogen auf die organischen Feststoffanteile der Reaktionsharzmasse

Die Ergebnisse der elektrischen Prüfung (Bestimmung des Oberflächenwiderstandes) sind in Tabelle 7 zusammengefaßt. Es zeigt sich, daß der Einfluß der Epoxidharzkomponente auf den resultierenden Oberflächenwiderstand nur gering ist. Bei einem Anteil von ca. 10 % an Antimon/Zinnoxid-beschichteten Kaliumtitanat-Whiskern wird bei 5 kV ein Oberflächenwiderstand innerhalb des üblicherweise geforderten Niveaus für Glimmschutzbänder erreicht.

Tabelle 7

| Beispiel | Oberflächenwiderstand in $10^3$ MΩ bei | | | | | |
|---|---|---|---|---|---|---|
| | 1 kV | 2 kV | 3 kV | 4 kV | 5 kV | 6 kV |
| 9 | 760 | 200 | 29 | 5,6 | 1,9 | 0,78 |
| 10 | 950 | 310 | 43 | 7,8 | 2,3 | 1,1 |
| 11 | 450 | 290 | 17 | 3,0 | 1,3 | 0,6 |

Tabelle 7   (fortgesetzt)

| Beispiel | Oberflächenwiderstand in $10^3$ MΩ bei | | | | | |
|---|---|---|---|---|---|---|
| | 1 kV | 2 kV | 3 kV | 4 kV | 5 kV | 6 kV |
| 12 | 1200 | 450 | 20 | 5,3 | 2,0 | 0,9 |

Beispiele 13 bis 16

Es wird der Einfluß unterschiedlicher Härterkomponenten auf die elektrischen Eigenschaften der Glimmschutzbänder untersucht. Als elektrisch leitfähiger Füllstoff dienen mit Antimon/Zinnoxid beschichtete Kaliumtitanat-Whisker. Das Trägermaterial ist ein Polyesterband (Breite 20 mm, Dicke 0,1 mm, Flächengewicht 71,5 g/m$^2$). Die Zusammensetzung der verwendeten Reaktionsharzmassen ist Tabelle 8 zu entnehmen.

Tabelle 8

| Beispiel | EP 1 MT | MEK MT | Härter/ Beschleuniger | F 1 MT | Füllstoff-Anteil % [1] |
|---|---|---|---|---|---|
| 13 | 100 | 70 | TEP 4 MT | 10,4 | 10,0 |
| 14 | 100 | 100 | DDS/2-MI 11,39 MT/0,372 MT | 11,18 | 10,0 |
| 15 | 100 | 70 | BFP 3 MT | 10,3 | 10,0 |
| 16 | 100 | 100 | SAM/2-MI 18 MT/0,152 MT | 11,82 | 10,0 |

[1] bezogen auf die organischen Feststöffanteile der Reaktionsharzmasse

Die Ergebnisse der elektrischen Prüfung (Bestimmung des Oberflächenwiderstandes) sind in Tabelle 9 zusammengefaßt. Es zeigt sich, daß der Einfluß der Härter-/Beschleunigerkomponente auf den resultierenden Oberflächenwiderstand nur gering ist. Bei einem Anteil von ca. 10 % an Antimon/Zinnoxidbeschichteten Kaliumtitanat-Whiskern wird bei 5 kV ein Oberflachenwiderstand innerhalb des üblicherweise geforderten Niveaus für Glimmschutzbänder erreicht.

Tabelle 9

| Beispiel | Oberflächenwiderstand in $10^3$ MΩ bei | | | | | |
|---|---|---|---|---|---|---|
| | 1 kV | 2 kV | 3 kV | 4 kV | 5 kV | 6 kV |
| 13 | 940 | 125 | 27 | 5,3 | 1,2 | 0,5 |
| 14 | 720 | 50 | 12 | 4,6 | 2,4 | 1,5 |
| 15 | 2200 | 150 | 20 | 5,3 | 2,0 | 0,9 |
| 16 | 1500 | 100 | 10 | 3,2 | 1,8 | 1,1 |

Beispiele 17 bis 21

Es wird die Lagerstabilität der Glimmschutzbänder untersucht. Dazu werden Glimmschutzbänder entsprechend Beispiel 15 bei Raumtemperatur gelagert, und nach unterschiedlichen Lagerzeiten (siehe Tabelle 10) werden Proben für die Bestimmung des Oberflächenwiderstands hergestellt. Die Zusammensetzung der verwendeten Reaktionsharzmasse ist Tabelle 8 zu entnehmen.

Tabelle 10

| Beispiel | Lagerdauer in Wochen bei Raumtemperatur |
|---|---|
| 17 | 1 |
| 18 | 2 |

Tabelle 10   (fortgesetzt)

| Beispiel | Lagerdauer in Wochen bei Raumtemperatur |
|---|---|
| 19 | 4 |
| 20 | 8 |
| 21 | 16 |

Die Ergebnisse der elektrischen Prüfung (Bestimmung des Oberflächenwiderstandes) sind in Tabelle 11 zusammengefaßt. Es zeigt sich, daß der Oberflächenwiderstand über die gesamte Lagerzeit nahezu konstant bleibt und innerhalb des üblicherweise geforderten Niveaus für Glimmschutzbänder liegt.

Tabelle 11

| Beispiel | Oberflächenwiderstand in MΩ bei | | | | | |
|---|---|---|---|---|---|---|
| | 1 kV | 2 kV | 3 kV | 4 kV | 5 kV | 6 kV |
| 15 | $2,2 \cdot 10^6$ | $150 \cdot 10^3$ | $20 \cdot 10^3$ | $5,3 \cdot 10^3$ | $2,0 \cdot 10^3$ | $0,9 \cdot 10^3$ |
| 17 | $3,2 \cdot 10^6$ | $190 \cdot 10^3$ | $31 \cdot 10^3$ | $7,1 \cdot 10^3$ | $3,5 \cdot 10^3$ | $1,4 \cdot 10^3$ |
| 18 | $2,6 \cdot 10^6$ | $160 \cdot 10^3$ | $25 \cdot 10^3$ | $6,4 \cdot 10^3$ | $2,6 \cdot 10^3$ | $1/1 \cdot 10^3$ |
| 19 | $3,5 \cdot 10^6$ | $240 \cdot 10^3$ | $30 \cdot 10^3$ | $8,3 \cdot 10^3$ | $4,1 \cdot 10^3$ | $1,5 \cdot 10^3$ |
| 20 | $1,7 \cdot 10^6$ | $120 \cdot 10^3$ | $15 \cdot 10^3$ | $3/6 \cdot 10^3$ | $2,0 \cdot 1^03$ | $0,8 \cdot 10^3$ |
| 21 | $2,1 \cdot 10^6$ | $170 \cdot 10^3$ | $22 \cdot 10^3$ | $5,0 \cdot 10^3$ | $1,9 \cdot 10^3$ | $1,0 \cdot 10^3$ |

Beispiel 22

Es werden die dielektrischen Eigenschaften eines handelsüblichen Glimmschutzbandes auf Epoxidharzbasis mit Siliciumcarbid als elektrisch leitfähigem Füllstoff (Beispiel 22) mit einem Glimmschutzband nach der Erfindung (Beispiel 9) verglichen. Dazu werden die Glimmschutzbänder einlagig, 50 % überlappend auf die Hauptisolierung von 10 kV-Spulen gewickelt. Die elektrische Kontaktierung wird durch Überlappen des Außenglimmschutzes hergestellt. Die 10 kV-Spulen werden anschließend einem VPI-Prozeß unterzogen, und dann wird gehärtet. Als Tränkharz dient eine niederviskose Mischung aus Bisphenol-Adiglycidylether und Tetrahydrophthalsäureanhydrid. An den imprägnierten Spulen werden die scheinbare Ladung $Q_{s\,max}$ als Maß für das Teilentladungsverhalten und der dielektrische Verlustfaktor tan δ im Bereich von 2 bis 10 kV (RMS) in 2 kV-Stufen bestimmt.
Die in den Tabelle 12 und 13 aufgeführten Ergebnisse zeigen, daß beim Glimmschutzband nach der Erfindung im Vergleich zum konventionellen, SiC-haltigen Glimmschutzband ein technisch vorteilhafter geringerer Teilentladungspegel am Nutende auftritt und daß dieses Glimmschutzband den angestrebten deutlich niedrigeren spannungsabhängigen Verlustfaktor aufweist.

Tabelle 12

| Beispiel | Scheinbare Ladung $Q_{s\,max}$ in nC bei | | | | |
|---|---|---|---|---|---|
| | 2 kV | 4 kV | 6 kV | 8 kV | 10 kV |
| 22 | 0,1 | 0,4 | 2 | 3 | 3,3 |
| 9 | 0,1 | 0,4 | 1,1 | 1,1 | 1,1 |

Tabelle 13

| Beispiel | tan δ $\cdot 10^{-3}$ bei | | | | |
|---|---|---|---|---|---|
| | 2 kV | 4 kV | 6 kV | 8 kV | 10 kV |
| 22 | 16 | 21 | 28 | 34 | 38 |
| 9 | 9 | 9 | 10 | 13 | 17 |

**EP 1 118 086 B1**

**Patentansprüche**

1. Glimmschutzband für elektrische Maschinen, insbesondere Hochspannungsmaschinen, erhältlich durch Imprägnieren eines gewebeartigen Trägermaterials mit einer Lösung eines Reaktionsharzes (Komponente A) in einem Lösemittel, die einen mit Antimon-dotiertem Zinnoxid beschichteten anorganischen Füllstoff sowie gegebenenfalls einen Härter und/oder Beschleuniger (Komponente B) enthält, und Entfernen des Lösemittels durch eine thermische Behandlung.

2. Glimmschutzband nach Anspruch 1, **dadurch gekennzeichnet, daß** der Gehalt an Füllstoff 2,5 bis 75 Gew.-% beträgt, vorzugsweise 2,5 bis 25 Gew.-%, bezogen auf die Summe der Komponenten A und B.

3. Glimmschutzband nach Anspruch 1 oder 2, **dadurch gekennzeichnet, daß** der Anteil des Antimons im Antimon-dotierten Zinnoxid 0,1 bis 30 Gew.-% beträgt.

4. Glimmschutzband nach einem der Ansprüche 1 bis 3, **dadurch gekennzeichnet, daß** das Trägermaterial ein Glasgewebe oder ein Gewebe aus organischem Material, insbesondere Polyester oder Aramid, ist.

5. Glimmschutzband nach einem oder mehreren der Ansprüche 1 bis 4, **dadurch gekennzeichnet, daß** das Reaktionsharz ein Epoxidharz, insbesondere ein aromatischer Di- oder Polyglycidylether, ist.

6. Glimmschutzband nach einem oder mehreren der Ansprüche 1 bis 5, **dadurch gekennzeichnet, daß** der Füllstoff Glimmer oder ein Titanat ist.

7. Glimmschutzband nach einem oder mehreren der Ansprüche 1 bis 6, **dadurch gekennzeichnet, daß** der Härter ein aromatisches Amin oder ein Bortrifluorid-Amin-Addukt ist.

8. Glimmschutzband nach einem oder mehreren der Ansprüche 1 bis 7, **dadurch gekennzeichnet, daß** der Beschleuniger ein Imidazolderivat ist.

**Claims**

1. Corona shielding band for electrical machines, in particular high-voltage machines, obtainable by impregnating a fabric-like carrier material with a solution of a reaction resin (component A) in a solvent, which contains and inorganic filler coated with antimony-doped tin oxide and, if appropriate, a hardener and/or accelerator (component B), and removing the solvent by a thermal treatment.

2. Corona shielding band according to Claim 1, **characterized in that** the content of filler is 2.5 to 75% by weight, preferably 2.5 to 25% by weight, in relation to the sum of components A and B.

3. Corona shielding band according to Claim 1 or 2, **characterized in that** the proportion of the antimony in the antimony-doped tin oxide is 0.1 to 30% by weight.

4. Corona shielding band according to one of Claims 1 to 3, **characterized in that** the carrier material is a glass fabric or a fabric of organic material, in particular polyester or aramid.

5. Corona shielding band according to one or more of Claims 1 to 4, **characterized in that** the reaction resin is an epoxy resin, in particular an aromatic diglycidyl or polyglycidyl ether.

6. Corona shielding band according to one or more of Claims 1 to 5, **characterized in that** the filler is mica or a titanate.

7. Corona shielding band according to one or more of Claims 1 to 6, **characterized in that** the hardener is an aromatic amine or a borotrifluoride amine adduct.

8. Corona shielding band according to one or more of Claims 1 to 7, **characterized in that** the accelerator is an imidazole derivative.

**Revendications**

1. Ruban de protection anti-effluves pour machines électriques, notamment pour machines à haute tension, pouvant être obtenu par imprégnation d'une matière support d'un genre tissé avec une solution d'une résine réactionnelle (composante A) dans un produit solvant, laquelle renferme une substance de charge anorganique revêtue d'un oxyde d'étain dopé à l'antimoine ainsi qu'un durcisseur et/ou un accélérateur (composante B) et élimination du produit solvant par traitement thermique.

2. Ruban de protection anti-effluves selon la revendication 1 **caractérisé par** le fait t que la teneur en substance de charge s'élève à 2,5 à 75 % en poids, de préférence 2,5 à 25 % en poids, rapportée à la somme des composantes A et B.

3. Ruban de protection anti-effluves selon la revendication 1 ou 2 **caractérisé par le fait que** la proportion de l'antimoine dans l'oxyde d'étain dopé à l'antimoine s'élève à 0,1 à 30 % en poids.

4. Ruban de protection anti-effluves selon l'une des revendications 1 à 3 **caractérisé par le fait que** la matière support est un tissu de verre textile ou un tissu de matière organique, notamment de polyester ou d'aramide.

5. Ruban de protection anti-effluves selon l'une ou plusieurs des revendications 1 à 4 **caractérisé par le fait que** la résine réactionnelle est une résine époxyde, notamment un éther diglycidylique ou polyglycidylique aromatique.

6. Ruban de protection anti-effluves selon l'une ou plusieurs des revendications 1 à 5 **caractérisé par le fait que** la substance de charge est du mica ou un titanate.

7. Ruban de protection anti-effluves selon l'une ou plusieurs des revendications 1 à 6 **caractérisé par le fait que** le durcisseur est un amine aromatique ou un produit d'addition bortrifluoro-amine.

8. Ruban de protection anti-effluves selon l'une ou plusieurs des revendications 1 à 7 **caractérisé par le fait que** l'accélérateur est un dérivé d'imidazole.